Europäisches Patentamt

European Patent Office

Office européen des brevets

(11) Veröffentlichungsnummer: **0 097 251**
**A1**

# (12) EUROPÄISCHE PATENTANMELDUNG

(21) Anmeldenummer: **83104994.5**

(22) Anmeldetag: **20.05.83**

(51) Int. Cl.³: **A 21 D 2/08**
**A 23 L 1/16**

(30) Priorität: **29.05.82 DE 3220425**

(43) Veröffentlichungstag der Anmeldung:
**04.01.84 Patentblatt 84/1**

(84) Benannte Vertragsstaaten:
**AT BE CH FR GB IT LI NL**

(71) Anmelder: **Korn, Helmut, Ing.-grad.**
**Wolfsgrabenstrasse 32**
**D-6480 Wächtersbach 1(DE)**

(72) Erfinder: **Korn, Helmut, Ing.-grad.**
**Wolfsgrabenstrasse 32**
**D-6480 Wächtersbach 1(DE)**

(74) Vertreter: **Munderich, Paul, Dipl.-Ing.**
**Frankfurter Strasse 84**
**D-6466 Gründau-Rothenbergen(DE)**

(54) **Back- und Teigwaren aus körnigem bis pulvrigem Getreidemehl und Zuguss.**

(57) Die Erfindung bestrifft Back- und Teigwaren, wobei es das Ziel ist, deren Vitamingehalt in wirksamer Weise durch im Haushalt vorhandene Mittel zu erhöhen.

Die erfindungsgemäße Lösung sieht vor, daß der Zuguß zum Mehl und zu den Lockerungsmitteln, z.B. Hefe, etwa zur Hälfte aus Bier besteht, dessen Anteile an Thiamin $(B_1)$, Lactoflavin $(B_2)$, Pyridoxin $(B_6)$, Nicotinsäure bzw. Nictonsäureamiden sowie an sonstigen Spuren in den fertigen Back- und Teigwaren verbleiben und sich kopulativ zu den fallweise bereits vorhandenen gleichen oder gleichartigen Substanzen verhalten.

Die so hergestellten, mit Vitaminen angereicherten Teigwaren können zur Milderung oder auch zur Behebung eventuell bestehender Vitaminmängel beitragen.

Darüberhinaus fördert der Bieranteil die Lockerungsfähigkeit des Teiges auch bei den ohne Hefezusätze hergestellten Nudeln oder dgl.

Durch deren gelockerte Struktur wird eine bessere Aufnahmefähigkeit für Soßen oder dgl. erreicht.

4 E 3/82          -/ -

Die Erfindung betrifft Backwaren und Teigwaren
aus körnigem bis pulvrigem Getreidemehl und zumindest Zuguß, wobei bei Herstellung von Backwaren Lockerungsmittel wie Hefe oder dgl. in üblicher Menge zugesetzt sind.

Produkte dieser Art, insbesondere aber Brot,
müssen als ein durch Backen hergestelltes Hauptnahrungsmittel bezeichnet werden, wobei im wesentlichen drei Teilprozesse gegeben sind, und zwar

      1.) die Teigbereitung,

      2.) die Teigauflockerung    und

      3.) der Backprozeß.

Die Bereitung von Teigwaren beschränkt sich auf
die Herstellung eines relativ festen Teiges, dem
vielfach Eier zugesetzt sind und dessen weitere
Verarbeitung, beispielsweise von Hand, in sogenannte "Nudelkuchen" erfolgt, die nach teilweiser
Trocknung geschnitten werden; und die geschnittenen
Teile sind in getrocknetem Zustand lagerfähig.

Bei maschineller Herstellung werden die bei
manueller Fertigung erforderlichen Schritte im
wesentlichen durch die Maschine in adäquater Weise
nachvollzogen.

Bei der Teigbereitung für Backwaren, insbesondere
Brot, knetet man je 100 Gewichtsteile Weizen- oder
Roggenmehl oder Mehlgemische mit 60 bis 80 Gewichtsteilen Zuguß, z.B. Wasser oder Milch oder ein Gemisch aus
diesen Flüssigkeiten. Während des Anrührens
wird diesem noch zusätzlich Auflockerungsmittel
und etwas Kochsalz ( nach persönlichem Geschmack )
beigemengt.

Geht man davon aus, daß die 100 Gewichtsteile
Mehl einem Kilo entsprechen, so erhält man eine
Teigmenge von ca. 1,7 kg, die man z.B. mit 30 g
bis 50 g  Presshefe, die in der Zugußflüssigkeit
gelöst werden, versetzt.
Der so bereitete Teig entwickelt Kohlendioxydgas,
wobei dieses den Teig lockert und das Brot porös
macht. Der Teig wird hierzu bei Temperaturen um
30° C ca. 2 bis 3 Stunden warm gehalten - bei Haushaltsherstellung z.B. auf einen Heizkörper gestellt - und hierbei gelockert ( der Teig geht ).

Während dieser Triebzeit vermehren sich die Hefezellen. Ihre Enzyme zersetzen einen Teil der Mehlstärke in Traubenzucker und überführen diesen teilweise in Alkohol und das bereits erwähnte Kohlendioxyd.
Im Anschluß an diesen Schritt wird das Brot gebacken.
Kleine Brötchen sind bereits nach 15 bis 20 Minuten
bei einer Backofentemperatur von 210° bis 235° C
fertig, während große Brote 60 bis 80 Minuten bei
250° bis 290° C benötigen.
Während des Backprozesses entweicht zumindest der
größte Teil des Alkoholanteiles.

Durch die Hefegärung gehen 1 % bis 3 % der
Stärke des Mehles verloren.

Unabhängig davon findet während des Backvorganges
eine Reihe von chemischen, kolloidchemischen und
physikalischen Veränderungen statt.
Diese fördern vor allen Dingen die Verdaulichkeit
und Ausnutzung der Mehlbestandteile, wobei ein erheblicher Teil der Stärke beim Backen in Dextrine,
Maltose und Traubenzucker übergeht.
Darüberhinaus findet eine teilweise Gerinnung des
Eiweißes und ein Absinken des Wassergehaltes statt.

Der Nährstoffgehalt der verschiedenen Brotsorten
schwankt allerdings nur unerheblich.
100 g Weißbrot enthalten 8 % Eiweiß, 0,5% Fett,
50 % Kohlehydrate, 37 % Wasser.
100 g Vollkornbrot enthält 8,1 % Eiweiß, 0,9 % Fett,
51 % Kohlehydrate, 37,3 Wasser.
Hinzukommen jeweils etwa 2 % Mineralsalze und ca.
2 % Rohfaserteile sowie geringe Mengen Vitamine.

Nach der "Naturwissenschaftlichen Rundschau" 1962,
Seite 236 bzw. 5, 7. Auflage, Band 1, Seite 438,
werden bei einem täglichen Verbrauch an Weizenbrot (Weizenvollkornbrot) von 300g dem Körper
16 % (38 %) des benötigten Vitamins $B_1$, 10 % (25 %)
vom Vitamin $B_2$, 23 % (80 %) der Nicotinsäure und
28 % (60 %) vom täglich benötigten Vitamin $B_6$ zugeführt.

Man sieht, daß einerseits der Nährstoffgehalt
der verschiedenen Brotsorten zumindest keine
vehementen Unterschiede aufweist.
Andererseits zeigen die Vitamingehalte zweier verschiedener Brotsorten gleicher Ausgangsbasis -Weizen-,
daß bei der Regulierung des körperlichen Vitaminhaushaltes die Wahl der Körnung für den Wert des Hauptvitaminträgers unserer Nahrung von eminenter Bedeutung ist.
Der bekannte Vitaminbedarf ist nicht nur personenabhängig, er wird auch wissenschaftlich nicht ganz
einheitlich bewertet, so daß Absolutzahlen im
Rahmen dieser Ausführung nicht zweckmäßig erscheinen ( siehe RÖMPP 7. Auflage, Bd. 1, Seite 438
und Bd. 6, Seite 628 ff.)
Nach der angezogenen Schrift werden in einigen
Ländern dem vitaminarmen Weißbrotmehl B-Vitamine
zugesetzt,wobei dieser Zusatz allerdings nicht
Sache der Hausfrauen und wahrscheinlich auch nicht
die der Bäckereien sein kann.

Im Hinblick auf die Bedeutung des Vitaminhaushaltes
des menschlichen Körpers ist es Aufgabe dieser
Erfindung, Back- und Teigwaren nach der eingangs
beschriebenen Art zu nennen, deren Vitamingehalt
in wirksamer Weise durch im Haushalt in aller Regel
vorhandene Mittel, die auf ungefährliche Weise
manipulierbar sind, erhöht sind.

Die erfindungsgemäße Lösung dieser Aufgabe sieht
vor, daß der Zuguß zum Mehl und gegebenenfalls zu den Lockerungsmitteln etwa zur Hälfte aus Bier besteht, dessen Anteile an Thiamin $(B_1)$, Lactoflavin $(B_2)$, Pyridoxin $(B_6)$, Nicotinsäure bzw. Nicotinsäureamiden sowie an sonstigen Spuren in den fertigen Back- oder Teigwaren verbleiben und sich kopulativ zu den fallweise bereits vorhandenen gleichen oder gleichartigen Substanzen verhalten.

Durch die Verwandtschaft des Bieres mit Back- und Teigwaren von der Basis her, d.h. Getreide, Stärke, Hefe usw.,werden aus dem Bier die genannten zusätzlichen Vitamine bei der Teigbereitung leichter aufgenommen.

Die Symptome von Thiaminmangel $(B_1)$ sind Appetitlosigkeit, Erbrechen, Resorptionsstörungen, Müdigkeit, Polyneuritiden in Form von Muskelschwäche, Gefühllosigkeit, Lähmungen und psychische Veränderungen, wie Gedächtnisschwund, Verwirrtheit, Depressionen sowie Herzrythmusstörungen und Störungen des Wasserhaushaltes.

Lactoflavin $(B_2)$-Mangel ist charakterisiert durch Entzündungen der Mund- und RAchenschleimhäute, Risse in den Mundwinkeln, Juckreiz und Entzündungen in den Hautfalten, Bindehautentzündung, verminderte Sehschärfe und Trübung der Hornhaut.

Pyridoxin (B$_6$) - Mangelerscheinungen sind recht unterschiedlich und wenig spezifisch. Sie können insbesondere in Hauterkrankungen ihren Niederschlag finden.

Der Mangel an Nicotinsäure bzw. Nicotinsäureamiden äußert sich in trockener, rissiger Haut, schuppiger Erythemen usw., während das nicht besonders erwähnte Vitamin B$_{12}$, das Cobalamin, insbesondere perzinöse Anämien verhindern kann.

Die täglich erforderlichen Vitaminmengen sind in etwa wie folgt anzusetzen:

$$B_1 \quad = \quad 0,9 \text{ bis } 1,2 \text{ mg/d}$$
$$B_2 \quad ca. \quad 0,6 \text{ bis } 1,2 \text{ mg/d}$$
$$B_6 \quad = \quad 2,0 \text{ bis } 4,0 \text{ mg/d}$$
$$B_{12} \quad = \quad 2,0 \text{ bis } 4,0 \text{ µg/d}$$

Nicotinsäure bzw. Nicotinsäureamide

15 bis 20 mg/d Dies sollen jedoch nur Anhaltswerte sein.

Die erfindungsgemäßen Back- und Teigwaren können auf einfache Weise zur Milderung oder auch zur Behebung eventuell bestehender Vitaminmängel beitragen.

Darüberhinaus fördert der Bieranteil die Lockerungsfähigkeit des Teiges, was sich nicht nur bei der Brotherstellung überzeugend darstellt sondern auch bei der Herstellung von Teigwaren beobachtet werden kann.

Insbesondere werden die im übrigen ohne Hefezusätze hergestellten Nudeln und Spätzle in ihrer Struktur gelockert, so daß sie für Soßen usw. aufnahmefähiger sind.

Desweiteren vermitteln die Bitterstoffe des Hopfens eine leichte Aromatisierung der Back- und Teigwaren, wobei, je nach Geschmack, mehr oder weniger gehopftes Bier verwendet werden kann.

Es kann weiter vorgesehen werden, daß die bei Backwaren entstehende Kruste zusätzlich mit Bier angereichert ist.

Dadurch wird die Kruste noch kräftiger und erhält insbesondere bei der Herstellung von Schwarzbrot einen ansprechenden Geschmack.

Fallweise empfiehlt es sich, dem Mehl zusätzlich in geringen Mengen feingemahlenes Anis und/oder Koriander zuzusetzen.

Der Zusatz dieser Stoffe trägt zur besseren Verdaulichkeit bei.

Selbstverständlich können die erfindungsgemäßen Brot- und Teigwaren in Verbindung mit Biogetreide optimal hergestellt werden.

Zusammengefaßt ist festzuhalten, daß die vorgeschlagene Lösung sowohl für sich allein als
auch in Verbindung mit den weiterbildenden Anregungen in vollem Umfang der Aufgabenstellung
gerecht wird, wobei es in diesem Zusammenhang
wichtig ist, daß die genannten Zusätze einschließlich der Spuren auf natürlichem Weg als
Nahrungsmittelbestandteile zugeführt werden.

### Patentansprüche

1. Back- und Teigwaren aus körnigem bis pulvrigem Getreidemehl und zumindest dem Zuguß, wobei bei Herstellung von Backwaren Lockerungsmittel wie Hefe oder dgl. in üblicher Menge zugesetzt sind, dadurch gekennzeichnet,

   d a ß der Zuguß zum Mehl und gegebenenfalls zu den Lockerungsmitteln etwa zur Hälfte aus Bier besteht, dessen Anteile an Thiamin ($B_1$), Lactoflavin ($B_2$), Pyridoxin ($B_6$), Nicotinsäure bzw. Nicotinsäureamiden sowie an sonstigen Spuren in den fertigen Back- oder Teigwaren verbleiben und sich kopulativ zu den fallweise bereits vorhandenen gleichen oder gleichartigen Substanzen verhalten.

2. Back- und Teigwaren nach Anspruch 1, dadurch gekennzeichnet,

   d a ß die bei Backwaren entstehende Kruste zusätzlich mit Bier angereichert ist.

3. Back- und Teigwaren nach Anspruch 1, dadurch gekennzeichnet,

   d a ß dem Mehl zusätzlich in geringen Mengen feingemahlenes Anis und/oder Koriander zugesetzt werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | IRELAND - IRISH RECIPES, Information Sheet no. 29, 1977, Seiten 1,2, Irish Tourist Board, IE. "Guinness Cake" * Seite 2, Spalte 2, Zeile 39 - Spalte 3, Zeile 21 * | 1,2 | A 21 D 2/08<br>A 23 L 1/16 |
| | --- | | |
| X | PROCEEDINGS OF A SYMPOSIUM PRESENTED AT THE AACC 65th ANNUAL MEETING, 21.-25. September 1980, Chicago, Illinois, Seiten 129-130, American ass. of cereal chemistry, 1981, St. Paul, Minnesota, USA B.S. MILLER: "Variety Breads in the United States" * Seite 129, Zeile 34 - Seite 130, Zeile 2 * | 1-3 | |
| | --- | | **RECHERCHIERTE SACHGEBIETE (Int. Cl. ³)** |
| X | R. OLIVER: "Standaard kookboek, 1001 geheimen van de verfijnde gastronomie", 1969, Standaard Uitgeverij, Antwerpen, BE. * Seite 620, Rezepte Nr. 1 und 3 * | 1 | A 21 D<br>A 23 L |
| | --- | | |
| X | DE REDACTIE VAN TIME-LIFE BOEKEN: "Praktisch koken, koek en gebak", 1980, Seite 116, Time-Life International, NL. * Seite 116, Spalte 1, Zeile 27 - Spalte 2, Zeile 7 * | 1,3 | |
| | ---     -/- | | |

Der vorliegende Recherchenbericht wurde für alle Patentansprüche erstellt.

| Recherchenort<br>DEN HAAG | Abschlußdatum der Recherche<br>12-09-1983 | Prüfer<br>COUCKE A.O.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

**0097251**

Nummer der Anmeldung

**Europäisches Patentamt**

**EUROPÄISCHER RECHERCHENBERICHT**

EP 83 10 4994

| | **EINSCHLÄGIGE DOKUMENTE** | | | Seite 2 |
|---|---|---|---|---|
| Kategorie | Kennzeichnung des Dokuments mit Angabe, soweit erforderlich, der maßgeblichen Teile | Betrifft Anspruch | **KLASSIFIKATION DER ANMELDUNG (Int. Cl. ³)** | |
| X | A. PHILIPSEN: "Brood en gebak op tafel", 1981, Seite 82, Helios N.V., Antwerpen, BE. <br> * Seite 82, Zeilen 1-8 * | 1 | | |
| | --- | | | |
| X | UPECTE SI SAMI, PETR TROJAN, CS. MLADY SVET: "Pivni chléb" * Spalte 5 * | 1,3 | | |
| | --- | | | |
| A | US-A-1 431 525 (C. HOFFMAN et al.) | | | |
| | --- | | | |
| A | FR-A- 999 570 (SOCIETE DES PATES FERMIERES) | | | |
| | --- | | | |
| A | US-A-2 819 969 (F. GRANDEL) | | **RECHERCHIERTE SACHGEBIETE (Int. Cl. ³)** | |
| | --- | | | |
| A | DE-B-1 054 316 (T. HUBER) | | | |
| | --- | | | |
| A | CH-A- 132 017 (E. ROSENBAUM) | | | |
| | --- | | | |
| A | FR-A-2 008 571 (F. LEIBER) | | | |
| | ----- | | | |
| | Der vorliegende Recherchenbericht wurde für alle Patentansprüche erstellt. | | | |

| Recherchenort <br> DEN HAAG | Abschlußdatum der Recherche <br> 12-09-1983 | Prüfer <br> COUCKE A.O.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82